# EUROPEAN PATENT APPLICATION

(11) **EP 4 403 265 A1**
(43) Date of publication of application: **24.07.2024**
(21) Application number: 22869731.4
(22) Date of filing: 12.08.2022
(51) Int. Cl.: B05B 5/08, A01M 7/00, B05B 5/025

(54) **ELECTROSTATIC SPRAYING DEVICE**

(30) Priority: 16.09.2021 JP 2021151237
(71) Applicant: Arimitsu Industry Co., Ltd., Osaka-shi, Osaka 537-0001 (JP)
(72) Inventor: OMACHI, Kouji, Shiki-gun, Nara 636-0234 (JP)
(74) Representative: dompatent von Kreisler Selting Werner - Partnerschaft von Patent- und Rechtsanwälten mbB
(86) International application number: PCT/JP2022/030705
(87) International publication number: WO 2023/042584

(57) **Abstract**

Provided is an electrostatic spraying device capable of reducing the weight of a charging section and not requiring terminal processing of the charging section. According to the present disclosure, there is provided an electrostatic spraying device equipped with a spray nozzle spraying a liquid and a strip-shaped charging section charging the liquid sprayed from the spray nozzle, the electrostatic spraying device comprising: a power supply line (41) which supplies power to the charging section; an electrical resistance member (43) that constitutes a part of a power supply path from the power supply line (41) to the charging section and allows a current flowing through the charging section to be weaker than a current flowing through the power supply line (41); and a housing (2) which accommodates the electrical resistance member (43) and into which the power supply line (41) is drawn.

## Description

### [Technical Field]

The present disclosure relates to an electrostatic spraying device.

### [Background Art]

Conventionally, in order to spray a chemical solution (liquid) on a field, an electrostatic spraying device is used which includes a spray nozzle that sprays the chemical solution and a charging section that charges the chemical solution sprayed from the spray nozzle.

The chemical solution sprayed from the spray nozzle is charged with a polarity opposite to that of a voltage applied to an electrode. The charged chemical solution spreads toward the field, and evenly adheres to the crops planted in the field due to the electrostatic effect.

The electrostatic spraying device described in Patent Document 1 is a boom sprayer, and a plurality of spray nozzles are arranged in parallel in the longitudinal direction of a support rod (boom). A plurality of mounted portions are arranged in parallel along the longitudinal direction of the support rod. The charging section is a cable and is spanned between the plurality of mounted portions. Two charging sections or the outgoing path and the incoming path of one charging section are separated from each other with a spray area from the spray nozzle interposed therebetween. The charging section functions as an electrode.

### [Prior Art Document]

### [Patent Document]

[Patent Document 1] Japanese Patent Laid-Open Publication No. 2015-174035

### [Summary of Invention]

### [Problems to be Solved by Invention]

In the electrostatic spraying device described in Patent Document 1, a cable that constitutes the charging section has a triple structure in which a strip conductor is double coated with a non-insulating material. In this case, the non-insulator is less conductive than the conductor and less insulating than the insulator. Since the double non-insulator makes the current flowing through the surface of the cable weaker than the current flowing through the conductor, the shock caused by electric shock generated when a person touches the cable is suppressed. The outer non-insulator also serves to protect the inner non-insulator.

However, since the cable with a triple structure is heavy, it is difficult to adjust the tension of the cable to an appropriate level. When the tension is too small, the cable will slacken and move too far from the spray nozzle, the sprayed chemical solution cannot be sufficiently charged. In contrast, when the tension is too large, excessive external force is applied from the cable to other members (for example, metal fittings connecting the mounted portion to the support rod). As a result, there is a risk that the member may be deformed. For these reasons, it is desired to reduce the weight of the charging section.

Further, in order to prevent electrical leakage from the conductor at the end of the cable, heat shrink tubing may be used to terminate the cable. However, terminal processing using heat-shrinkable tubes requires skill.

An object of the present disclosure is to provide an electrostatic spraying device capable of reducing the weight of a charging section and not requiring terminal processing of the charging section.

### [Means for Solving Problems]

According to the present disclosure, there is provided an electrostatic spraying device equipped with a spray nozzle spraying a liquid and a strip-shaped charging section charging the liquid sprayed from the spray nozzle, the electrostatic spraying device comprising: a power supply line which supplies power to the charging section; an electrical resistance member that constitutes a part of a power supply path from the power supply line to the charging section and allows a current flowing through the charging section to be weaker than a current flowing through the power supply line; and a housing which accommodates the electrical resistance member and into which the power supply line is drawn.

In the present disclosure, power is supplied from the power supply line to the charging section through the power supply path. Since the electrical resistance member constitutes a part of the power supply path, a current flowing through the charging section becomes weaker than a current flowing through the power supply line. Therefore, the shock caused by electric shock generated when a person touches the charging section is suppressed.

Since the current flowing through the charging section is weak, there is no need to perform terminal processing of the charging section for the purpose of preventing electrical leakage from the charging section.

The electrical resistance member is accommodated in the housing. Since the electrical resistance member accommodated in the housing weakens the current, there is no need to cover the charging section with a non-insulating material for the purpose of weakening the current. Therefore, the weight of the charging section can be reduced.

When the charging section is lightweight, it is easy to adjust the tension of the charging section to an appropriate level. Therefore, there is no risk that the charging section is loosened due to too small tension and there is no risk that excessive external force is applied from the charging section to other members due to too large tension.

According to the present disclosure, there is provided the electrostatic spraying device further comprising: a support rod which supports the spray nozzle; and a support member that constitutes another part of the power supply path and supports the charging section, wherein the housing is attached to the support rod, and wherein the support member is attached to the housing.

In the present disclosure, the housing is attached to the support rod, the support member is attached to the housing, and the support member supports the charging section. Since the support member constitutes another part of the power supply path, power is supplied from the power supply line to the charging section through the electrical resistance member and the support member.

The housing serves as a member that accommodates the electrical resistance member and a member that connects the support member to the support rod and the support member serves as a member that supports the charging section and a member that supplies power to the charging section. Therefore, the number of parts can be reduced.

According to the present disclosure, there is provided the electrostatic spraying device further comprising: a conductive elastic member that is accommodated in the housing and is in elastic contact with one side of the electrical resistance member and the power supply line drawn into the housing; and a fixing member that is disposed between the support member and the other side of the electrical resistance member in the power supply path and attaches the support member to the housing.

In the present disclosure, the elastic member is accommodated in the housing. Due to the restoring force of the elastic member, the elastic member is pressed against one side of the electrical resistance member and the power supply line drawn into the inner space of the housing. Since the elastic member has conductivity, the power supply line and the electrical resistance member can be electrically connected easily.

Since the fixing member is disposed between the support member and the other side of the electrical resistance member in the power supply path, power is supplied from the power supply line to the charging section through the electrical resistance member, the fixing member, and the support member. Since the fixing member serves as a member that attaches the support member to the housing and a member that supplies power to the charging section, the number of parts can be reduced.

According to the present disclosure, there is provided the electrostatic spraying device, wherein the charging section is a bare metal wire, wherein the electrical resistance member includes a resistor, a block made of conductive rubber, or a block made of conductive resin, and wherein the housing has a light shielding property.

In the present disclosure, the charging section is a bare metal wire.

The bare wire is readily available. Further, since the terminal processing of the bare wire is not required, the charging section having a required length can be easily obtained by connecting a plurality of short bare wires to each other.

When the electrical resistance member includes a resistor, the electrical resistance member can be easily configured using, for example, a commercially available resistor. When the electrical resistance member includes a block made of conductive rubber or conductive resin, the electrical resistance member having, for example, a desired shape can be easily obtained by molding. Therefore, the degree of freedom in designing the housing that accommodates the electrical resistance member is improved. Alternatively, an electrical resistance member having a desired resistance value can be obtained.

Since the housing has a light shielding property, it is possible to prevent ultraviolet rays from corroding the electrical resistance member.

### [Effects of Invention]

According to the electrostatic spraying device of the present disclosure, the weight of the charging section can be reduced. Further, the terminal processing of the charging section is not required.

### [Brief Description of Drawings]

FIG. 1 is a perspective view of an electrostatic spraying device according to an embodiment.
FIG. 2 is a schematic view of the electrostatic spraying device.
FIG. 3 is an enlarged perspective view of the electrostatic spraying device.
FIG. 4 is a cross-sectional view of a housing.
FIG. 5 is an exploded perspective view of the housing.
FIG. 6 is a perspective view in the vicinity of an end of a charging section.

### [Mode for Carrying out Invention]

Hereinafter, an embodiment of the present disclosure will be described.

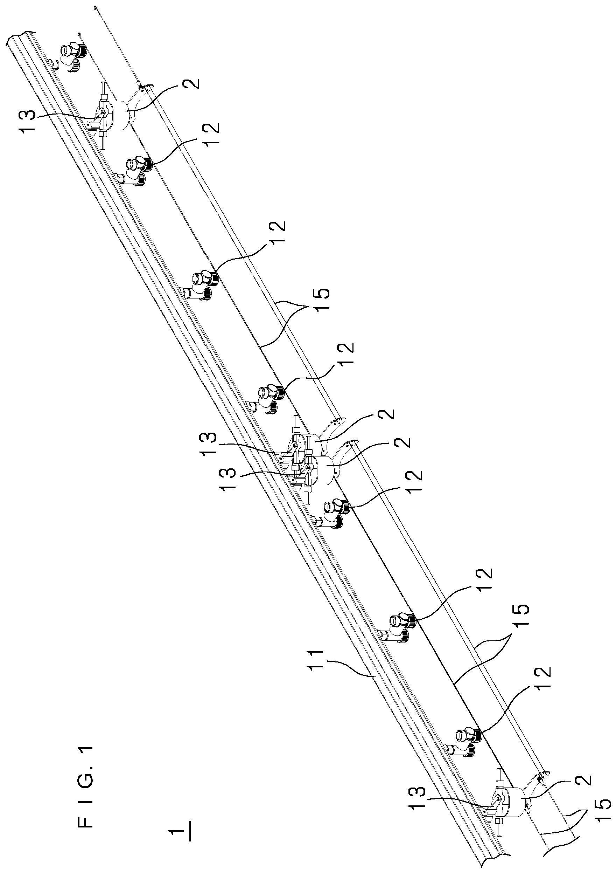

FIG. 1 is a perspective view of an electrostatic spraying device according to the embodiment.

In the figure, Reference Numeral 1 denotes an electrostatic spraying device and the electrostatic spraying device 1 includes a support rod 11, a plurality of spray nozzles 12, and a plurality of support fittings 13.

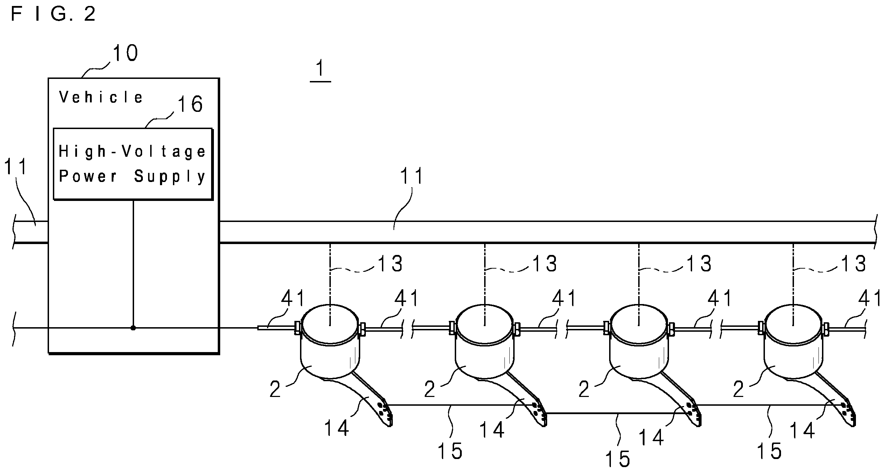

FIG. 2 is a schematic view of the electrostatic spraying device 1.

The electrostatic spraying device 1 of this embodiment includes two support rods 11. For example, two support rods 11 are provided to be respectively located on each side of the left and right sides of a vehicle 10, and move together with the vehicle 10.

As shown in FIG. 1, the spray nozzle 12 is provided inside the support rod 11. The plurality of spray nozzles 12 are arranged at appropriate intervals in the longitudinal direction of the support rod 11. A chemical solution (herbicide, plant growth regulator, or the like) is supplied to the spray nozzle 12 through a liquid supply path (not shown) provided inside the support rod 11. The spray nozzle 12 sprays the supplied chemical solution.

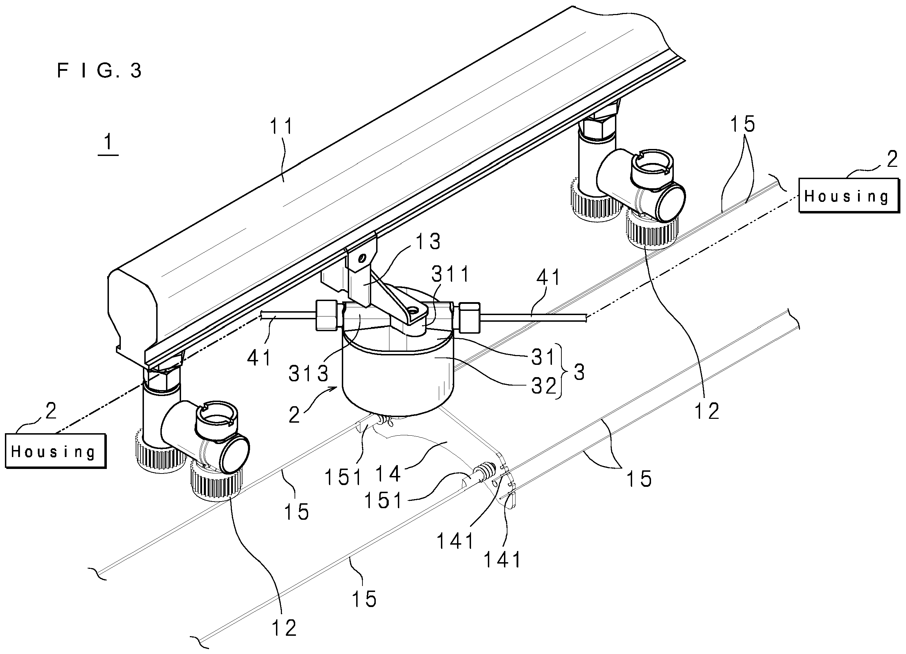

The plurality of support fittings 13 are arranged at appropriate intervals in the longitudinal direction of the support rod 11. The support fitting 13 is provided on the support rod 11 at an appropriate separation distance from the spray nozzle 12 (see FIG. 3 described later). The configuration of the support fitting 13 is not limited, but the support fitting 13 integrally includes at least a portion attached to the support rod 11 and a portion attached to the housing 2 described later.

During use of the electrostatic spraying device 1, the support rod 11 is held, for example, in a horizontally extending manner. In this case, the spray direction of the spray nozzle 12 is downward. The attachment portion of the support fitting 13 to the housing 2 is located below the support rod 11. The vehicle 10 travels through the field with the support rod 11 passing above the crops, either by operator operation or remote control, or by automatic operation.

Hereinafter, the spray direction of the spray nozzle 12 is referred to as a downward direction, and the direction opposite to the spray direction of the spray nozzle 12 is referred to as an upward direction.

The electrostatic spraying device 1 includes the plurality of housings 2. The housing 2 has light shielding and insulating properties, and is made of, for example, synthetic resin.

FIG. 3 is an enlarged perspective view of the electrostatic spraying device 1.

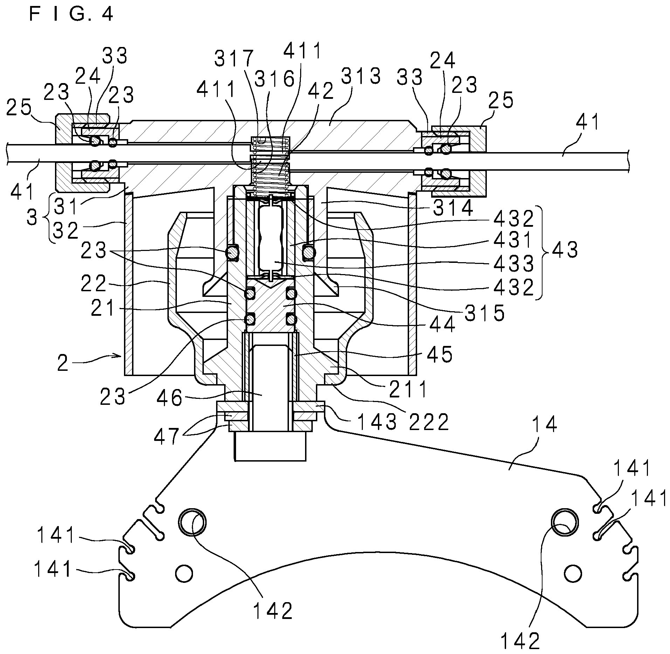

FIG. 4 is a cross-sectional view of the housing 2.

As shown in FIGS. 3 and 4, the housing 2 includes an outer cover 3, and the outer cover 3 has a cylindrical shape with a bottom. The outer cover 3 includes a disk-shaped bottom wall member 31 and a cylindrical peripheral wall member 32. The bottom wall member 31 constitutes the bottom wall of the outer cover 3 and the peripheral wall member 32 constitutes the peripheral wall of the outer cover 3.

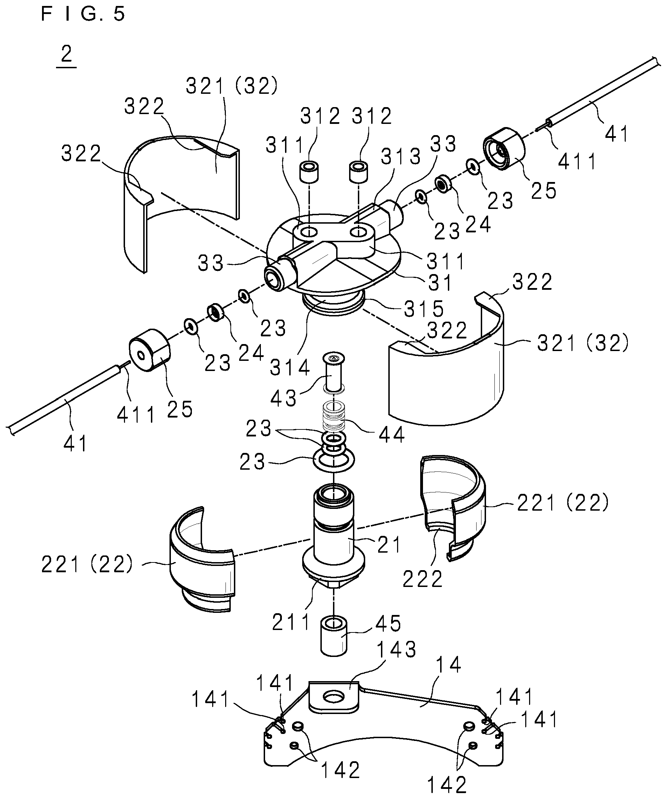

FIG. 5 is an exploded perspective view of the housing 2.

The peripheral wall member 32 can be divided into two parts in the circumferential direction, and is detachably attached to the bottom wall member 31. The peripheral wall member 32 of this embodiment includes two semi-cylindrical members 321. The semi-cylindrical member 321 includes two engagement pieces 322 at the opening peripheral edge on one end side in the axial direction. The engagement piece 322 protrudes inward from the inner peripheral surface of the semi-cylindrical member 321. When the engagement piece 322 engages with an engaged portion (not shown) provided in the bottom wall member 31, the semi-cylindrical member 321 is attached to the bottom wall member 31. Two semi-cylindrical members 321 attached to the bottom wall member 31 form the peripheral wall member 32 in such a manner that engagement portions (not shown) provided at both circumferential ends of one semi-cylindrical member 321 engage with engaged portions (not shown) provided at both circumferential ends of the other semi-cylindrical member 321.

As shown in FIG. 3, the housing 2 is attached to the support rod 11 through the support fitting 13. In order to attach the housing 2 to the support rod 11, the outer cover 3 is attached to the support fitting 13 with the opening of the outer cover 3 facing downward.

As shown in FIG. 5, two bosses 311 are provided on the outer surface of the bottom wall member 31 of the outer cover 3 to be integrated with the bottom wall member 31 (see FIG. 3). The axial direction of the boss 311 is along the axial direction of the outer cover 3. Two bosses 311 are arranged symmetrically about the center position of the bottom wall member 31. An insert nut 312 is coaxially fitted into the boss 311. The insert nut 312 is used when attaching the housing 2 to the support fitting 13 by a bolt (not shown).

As shown in FIGS. 3 to 5, a horizontal cylindrical portion 313 is integrally provided on the outer surface of the bottom wall member 31. The horizontal cylindrical portion 313 has a length which is substantially the same as the diameter of the bottom wall member 31 and extends to pass through the center position of the bottom wall member 31 along the outer surface of the bottom wall member 31.

As shown in FIGS. 4 and 5, a vertical cylindrical portion 314 is integrally provided on the inner surface of the bottom wall member 31. The vertical cylindrical portion 314 has a cylindrical shape and protrudes from the center of the bottom wall member 31 to be coaxial with the outer cover 3. The protrusion amount of the vertical cylindrical portion 314 from the bottom wall member 31 is about half of the protrusion amount of the peripheral wall member 32 from the bottom wall member 31.

A truncated cylindrical enlarged diameter portion 315 is provided at the tip of the vertical cylindrical portion 314 to be coaxial with the vertical cylindrical portion 314. The enlarged diameter portion 315 extends downward to increase in diameter from the opening periphery of the vertical cylindrical portion 314.

As shown in FIG. 4, a communication hole 316 is provided in a portion surrounded by the vertical cylindrical portion 314 of the bottom wall member 31. The communication hole 316 allows the inside of the horizontal cylindrical portion 313 and the inside of the vertical cylindrical portion 314 to communicate with each other.

An accommodation recess 317 is provided on the inner peripheral surface of the horizontal cylindrical portion 313 to face the communication hole 316.

A path from the opening on one end side in the axial direction of the horizontal cylindrical portion 313 to the accommodation recess 317 is disposed on the inner surface side of the bottom wall member 31 in relation to a path from the opening on the other end side in the axial direction of the horizontal cylindrical portion 313 to the accommodation recess 317.

As shown in FIGS. 4 and 5, two cylindrical members 33 are coaxially provided in the horizontal cylindrical portion 313. One cylindrical member 33 is fixed to one end in the axial direction of the horizontal cylindrical portion 313 and the other cylindrical member 33 is fixed to the other end in the axial direction of the horizontal cylindrical portion 313. The boundary portion between the horizontal cylindrical portion 313 and the cylindrical member 33 is sealed, and the chemical solution will not enter from the boundary portion.

The housing 2 further includes a cylindrical body 21 and a cylindrical inner cover 22.

The cylindrical body 21 is attached to the inner surface of the bottom wall member 31 in such a manner that one end in the axial direction is coaxially fitted to the vertical cylindrical portion 314. A gap between the outer peripheral surface of the cylindrical body 21 and the inner peripheral surface of the vertical cylindrical portion 314 is watertightly sealed by an O-ring 23 fitted onto the cylindrical body 21.

An inner peripheral surface of the enlarged diameter portion 315 located at the distal end of the vertical cylindrical portion 314 functions as a guide surface when the cylindrical body 21 is fitted into the vertical cylindrical portion 314. The upper half of the cylindrical body 21 is disposed inside the vertical cylindrical portion 314 and the lower half of the cylindrical body 21 is located below the vertical cylindrical portion 314.

The inner cover 22 is attached to the other end of the cylindrical body 21 in the axial direction (that is, the lower end of the cylindrical body 21) to surround the cylindrical body 21 in the circumferential direction with the axial direction facing up and down. The upper opening of the inner cover 22 is directed toward the inner surface of the bottom wall member 31.

The inner cover 22 can be divided in the circumferential direction and is detachably attached to the cylindrical body 21.

As shown in FIG. 5, the inner cover 22 of this embodiment includes two semi-cylindrical members 221. The semi-cylindrical member 221 includes an engagement portion (not shown) at one end in the circumferential direction and includes an engaged portion (not shown) provided at the other end in the circumferential direction. Two semi-cylindrical members 221 form the inner cover 22 in such a manner that the engagement portion of one semi-cylindrical member 221 engages with the engaged portion of the other semi-cylindrical member 221.

As shown in FIGS. 4 and 5, an engaged portion 211 is provided at the lower end of the cylindrical body 21 in order to attach the inner cover 22 to the cylindrical body 21. The engaged portion 211 protrudes outward from the outer peripheral surface of the cylindrical body 21. The engaged portion 211 is provided with a recess over the entire circumference.

On the other hand, an engagement portion 222 is provided at one end in the axial direction of the inner cover 22. The engagement portion 222 protrudes inward from the opening periphery of the inner cover 22. Each semi-cylindrical member 221 has a half of the engagement portion 222 in the circumferential direction.

By attaching two semi-cylindrical members 221 to each other so that the engagement portion 222 engages with the recess of the engaged portion 211 to form the inner cover 22, the inner cover 22 is attached to the lower end of the cylindrical body 21 to surround the cylindrical body 21 in the circumferential direction. The lower opening of the inner cover 22 is closed by the cylindrical body 21. The inner cover 22 covers the enlarged diameter portion 315 from the enlarged diameter portion 315 to the vicinity of the base end of the vertical cylindrical portion 314.

As shown in FIG. 4, two power supply lines 41 are drawn into the housing 2 in a watertight manner, and an elastic member 42 and an electrical resistance member 43 are respectively accommodated in a watertight manner. Further, the housing 2 accommodates a seal plug 44 and an insert nut 45.

For example, the seal plug 44 and the insert nut 45 each have conductivity and are made of metal.

The seal plug 44 has a columnar shape and is coaxially fitted into the cylindrical body 21. The seal plug 44 is disposed at the center of the cylindrical body 21 in the axial direction. A gap between the outer peripheral surface of the seal plug 44 and the inner peripheral surface of the cylindrical body 21 is watertightly sealed by the O-ring 23 fitted onto the seal plug 44.

The insert nut 45 is a fixing member of this embodiment and is coaxially fitted into the lower end of the cylindrical body 21. The upper end of the insert nut 45 is in contact with the lower end of the seal plug 44.

The electrical resistance member 43 includes an accommodation cylinder 431, two terminal members 432, and a resistor main body 433.

The accommodation cylinder 431 is an insulating cylinder, and is made of, for example, synthetic resin.

The terminal member 432 is a conductive disk, and is attached to the accommodation cylinder 431 to cover the openings at both ends of the accommodation cylinder 431.

The resistor main body 433 has a predetermined electrical resistance value (for example, 1 GΩ). The resistor main body 433 is a resistor, and is accommodated in the accommodation cylinder 431 so that its two connection terminals are connected to two terminal members 432. Furthermore, the resistor main body 433 may be a block made of conductive rubber or conductive resin. In this case, the resistor main body 433 is accommodated in the accommodation cylinder 431 to be in contact with each of two terminal members 432.

The electrical resistance member 43 is fitted into the upper end of the cylindrical body 21 so that the accommodation cylinder 431 is disposed coaxially with the cylindrical body 21. The lower terminal member 432 is in contact with the upper end of the seal plug 44.

The elastic member 42 has conductivity and is made of, for example, metal. The elastic member 42 of this embodiment is a coil spring, is disposed coaxially with the accommodation cylinder 431 of the electrical resistance member 43, and penetrates the communication hole 316. The elastic member 42 is disposed in a compressed state between the bottom surface of the accommodation recess 317 and the upper terminal member 432 of the electrical resistance member 43. The upper end of the elastic member 42 in the axial direction is accommodated in the accommodation recess 317 and is in elastic contact with the bottom surface of the accommodation recess 317. The lower end of the elastic member 42 in the axial direction is in elastic contact with the upper terminal member 432 of the electrical resistance member 43.

The power supply line 41 includes a strip-shaped conductor 411 and an insulator covering the entire length of the conductor 411. However, the conductor 411 is exposed at the end of the power supply line 41. The power supply line 41 is drawn into the horizontal cylindrical portion 313 of the bottom wall member 31 through the cylindrical member 33. The conductor 411 exposed at one end of the power supply line 41 is inserted into the elastic member 42. As a result, the elastic member 42 is in elastic contact with the conductor 411.

A gap between the outer peripheral surface of the power supply line 41 and the inner peripheral surface of the cylindrical member 33 is watertightly sealed. For example, the O-ring 23 is fitted onto the power supply line 41, a cylindrical seal member 24 is coaxially fitted into the cylindrical member 33, and the O-ring 23 is in elastic contact with the inner peripheral surface of the seal member 24.

In order to protect the O-ring 23 and the seal member 24, the cylindrical member 33 is covered with a cylindrical protective cap 25. A through-hole is provided in the bottom wall of the protective cap 25. The protective cap 25 is coaxially fitted onto the cylindrical member 33 while the power supply line 41 penetrates the through-hole of the protective cap 25.

In this way, the power supply line 41 is watertightly drawn into the inner space of the housing 2 and is electrically connected to the resistor main body 433 of the electrical resistance member 43.

The electrostatic spraying device 1 includes the same number of support members 14 as the number of housings 2. The support member 14 has conductivity, and is made of, for example, metal.

As shown in FIGS. 4 and 5, the support member 14 is a plate material that is long in one direction. The support member 14 is provided with a plurality of bare wire support portions 141 and a plurality of metal fitting support portions 142. The bare wire support portion 141 of this embodiment is a notch provided in the edge of the support member 14. The metal fitting support portion 142 of this embodiment is a through-hole penetrating the support member 14. The bare wire support portion 141 and the metal fitting support portion 142 are arranged at both ends of the support member 14 in the longitudinal direction.

The support member 14 is attached to the housing 2 to be electrically connected to the resistor main body 433 of the electrical resistance member 43.

In order to attach the support member 14 to the housing 2, the support member 14 is provided with, for example, an attachment plate 143. The attachment plate 143 perpendicularly protrudes from the edge of the support member 14 toward the support member 14. The attachment plate 143 is provided with a through-hole.

As shown in FIG. 4, the attachment plate 143 is attached to the lower end of the cylindrical body 21 in such a manner that a bolt 46 penetrating the through-hole of the attachment plate 143 from below is screwed into the insert nut 45. In this case, the support member 14 is disposed to be located below the attachment plate 143 so that the longitudinal direction is perpendicular to each of the longitudinal direction and the vertical direction of the support rod 11. Two washers 47 are interposed between the head of the bolt 46 and the attachment plate 143 of the support member 14. One washer 47 is a flat washer, and the other washer 47 is a spring washer.

The bolt 46 and the washer 47 each have conductivity, and are made of, for example, metal.

As shown in FIG. 3, the support fitting 13, the support member 14, and the housing 2 are sufficiently separated from the spray nozzle 12. Therefore, there is no risk that these will inhibit the spraying of the chemical solution from the spray nozzle 12 and there is no risk that the chemical solution that adheres to these will flow into the spray nozzle 12.

As shown in FIGS. 1 to 3, the electrostatic spraying device 1 includes a plurality of charging sections 15. The charging section 15 has a strip shape, and is, for example, a bare metal wire such as a stainless steel wire.

The charging section 15 is spanned between the plurality of support members 14 to extend in parallel to the support rod 11.

In this embodiment, each charging section 15 is spanned between two adjacent support members 14. One end of the charging section 15 is locked to the support member 14 through the bare wire support portion 141 of one support member 14. Similarly, the other end of the charging section 15 is locked to the other support member 14. Alternatively, a connection fitting 151 is provided at each of both ends of the charging section 15 and the connection fitting 151 is attached to the support member 14 through the metal fitting support portion 142 of the support member 14.

In this embodiment, two (or four) charging sections 15 are arranged one by one (or two at a time) separated from each other with a spray area (not shown) from the spray nozzle 12 interposed therebetween. The spray area has, for example, a cone shape or a fan shape with the apex of the spray nozzle 12 as the apex.

Furthermore, the charging section 15 may be spanned between three or more support members 14. Further, one charging section 15 may be disposed in a U shape and the outgoing path and the incoming path of the charging section 15 may be separated from each other with the spray area from the spray nozzle 12 interposed therebetween.

The charging section 15 is separated from the spray nozzle 12 by a distance in which the spraying of the chemical solution from the spray nozzle 12 is not disturbed and the chemical liquid attached to the charging section 15 does not flow into the spray nozzle 12. Further, the charging section 15 is disposed near the spray area of the spray nozzle 12 so that the chemical solution sprayed from the spray nozzle 12 can be sufficiently inductively charged.

As shown in FIG. 2, the electrostatic spraying device 1 includes a high-voltage power supply 16.

The high-voltage power supply 16 is mounted on the vehicle 10 and includes, for example, a battery that outputs a DC voltage, a booster circuit that boosts the output of the battery, and the like. The negative output terminal of the high-voltage power supply 16 is grounded via a ground wire (not shown). The positive output terminal of the high-voltage power supply 16 is connected to one end of the first power supply line 41.

The other end of the first power supply line 41 is drawn into the first housing 2 located at a position closest to the high-voltage power supply 16. One end of the second power supply line 41 different from the first power supply line 41 is drawn into the first housing 2 and is electrically connected to the other end of the first power supply line 41 inside the first housing 2 (see FIG. 4).

The other end of the second power supply line 41 is drawn into the second housing 2 adjacent to the first housing 2. One end of the third power supply line 41 different from the first and second power supply lines 41 is drawn into the second housing 2 and is electrically connected to the other end of the second power supply line 41 inside the second housing 2.

Similarly, the other end of the third power supply line 41 is drawn into the third housing 2.

Power is supplied from the power supply line 41 to the charging section 15 and the charging section 15 functions as a positive electrode for charging a chemical solution. As shown in FIG. 4, the power supply path from the power supply line 41 to the charging section 15 includes the elastic member 42, the electrical resistance member 43, the seal plug 44, the insert nut 45, the bolt 46, the washer 47, the attachment plate 143, and the support member 14.

A current flowing from the power supply line 41 to the electrical resistance member 43 through the elastic member 42 is weakened by the resistor main body 433. The weakened current flows to the charging section 15 through the seal plug 44, the insert nut 45, the bolt 46, the washer 47, the attachment plate 143, and the support member 14.

The elastic member 42 is pressed against each of the upper end of the electrical resistance member 43 and the power supply line 41 drawn into the inner space of the housing 2 by the restoring force of the elastic member 42. Since the elastic member 42 has conductivity, the power supply line 41 and the electrical resistance member 43 can be electrically connected easily.

The reason why the charging section 15 is not covered with an insulator is that the charging section 15 is used to charge the chemical solution. Since a current flows through the surface of the charging section 15, the chemical solution sprayed from the spray nozzle 12 is sufficiently charged.

Since each spray nozzle 12 faces downward, the chemical solution sprayed from the spray nozzle 12 is spread toward the crops. Since the charging section 15 is a positive electrode, a negative charge is given to the chemical solution sprayed from the spray nozzle 12. When a negative charge exists near a crop, the crop becomes polarized, for example, so that the upper and lower surfaces of the leaf are positive and the inside of the leaf is negative. For this reason, the negatively charged chemical solution is attracted to the crop and evenly adheres to both the upper and lower surfaces of the leaves.

The current flowing through the charging section 15 is weaker than the current flowing through the power supply line 41. Therefore, the shock caused by electric shock generated when a person touches the charging section 15 is suppressed. That is, the safety is high. Further, for the purpose of preventing electrical leakage from the charging section 15, it is not necessary to perform terminal processing of the charging section 15 (for example, terminal processing using heat-shrinkable tubes).

Since both the elastic member 42 and the conductor 411 of the power supply line 41 are watertightly accommodated in the housing 2, electrical leakage from the conductor 411 or the elastic member 42 through the chemical solution that has entered the housing 2 is prevented.

Since the electrical resistance member 43 accommodated in the housing 2 weakens the current, there is no need to cover the charging section 15 with a non-insulator for the purpose of weakening the current. Therefore, the weight of the charging section 15 can be reduced. Further, since the charging section 15 does not include a non-insulator, there is no need to replace the charging section 15 due to corrosion or damage to the non-insulator.

The charging section 15 and the power supply path to the charging section 15 are insulated from the ground. For example, even when a liquid film is formed over a wide area due to droplets of chemical solution blown by the wind adhering to the surface of various parts of the electrostatic spraying device 1, there is no risk that the current that should flow to the charging section 15 will pass through the liquid film and cause a ground fault. This is because the surface shapes of the outer cover 3 and the inner cover 22 of the housing 2 are complex so that a liquid film formed on the side of the inner cover 22 (the side close to the charging section 15) and a liquid film formed on the side of the outer cover 3 (the side close to the ground) are not continuous. Therefore, the charging section 15 or the power supply path to the charging section 15 is not electrically connected to the ground through the liquid film.

The charging section 15 of this embodiment is a bare wire, and the bare wire is easily available. Further, since there is no need to perform terminal processing of the bare wires, the charging section 15 having a required length can be easily obtained by connecting a plurality of short bare wires to each other even when the obtained bare wires are too short.

Since the electrical resistance member 43 includes a resistor as the resistor main body 433, the electrical resistance member 43 can be easily configured using, for example, a commercially available resistor. When the electrical resistance member includes a block made of conductive rubber or conductive resin as the resistor main body 433, for example, the resistor main body 433 having a desired shape can be easily obtained by molding. Therefore, the degree of freedom in designing the accommodation cylinder 431 that accommodates the resistor main body 433 and further the degree of freedom in designing the housing that accommodates the electrical resistance member 43 are improved. Alternatively, the resistor main body 433 having a desired resistance value can be obtained.

Since the housing 2 has a light shielding property, it is possible to prevent ultraviolet rays from corroding the electrical resistance member 43. Further, since the housing 2 watertightly accommodates the electrical resistance member 43, it is possible to prevent the chemical solution that has entered the housing 2 from corroding the electrical resistance member 43.

The housing 2 serves as a member that accommodates the electrical resistance member 43 and a member that connects the support member 14 to the support rod 11 and the support member 14 serves as a member that supports the charging section 15 and a member that supplies power to the charging section 15. Further, the insert nut 45 serves as a member that attaches the support member 14 to the housing 2 and a member that supplies power to the charging section 15. As a result, the number of parts can be reduced.

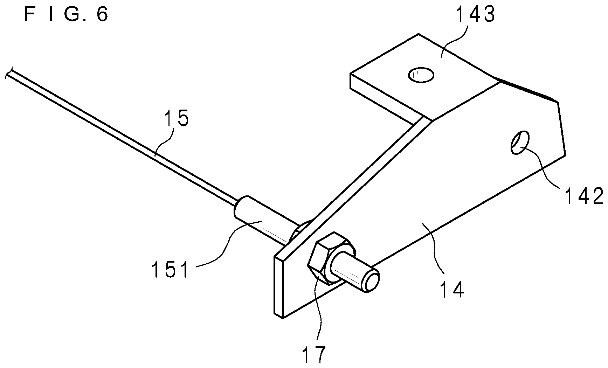

FIG. 6 is a perspective view in the vicinity of the end of the charging section 15.

The charging section 15 is preferably provided with a tension adjustment section 17 for adjusting the tension of the charging section 15. The configuration of the tension adjustment section 17 is not limited, but the figure shows an example in which the tension adjustment section 17 is a nut. The connection fitting 151 of the charging section 15 is a stud bolt and penetrates the metal fitting support portion 142 of the support member 14. One end of the charging section 15 is fixed to one end of the connection fitting 151 and the male thread of the other end of the connection fitting 151 is screwed into the female thread of the tension adjustment section 17. As a result, the tension adjustment section 17 is pressed against the opening peripheral edge of the metal fitting support portion 142 due to the weight of the charging section 15.

The tension of the charging section 15 is adjusted when the operator changes the screwing position between the connection fitting 151 and the tension adjustment section 17.

Since the charging section 15 is lightweight, it is easy to adjust the tension of the charging section 15 to an appropriate level.

Therefore, there is no risk that the charging section 15 is loosened due to too small tension. Thus, since there is no risk that the charging section 15 excessively moves away from the spray area, the sprayed chemical solution can be sufficiently charged.

Further, there is no risk that excessive external force is applied from the charging section 15 to other members (for example, the support fitting 13) due to too large tension.

Furthermore, the tension adjustment section 17 may include a nut and a coil spring. In this case, the connection fitting 151 is, for example, a hexagonal bolt, and a coil spring in which the leg of the hexagonal bolt is inserted is interposed between the head of the hexagonal bolt and the nut of the tension adjustment section 17.

Alternatively, the tension adjustment section 17 may be a known wire tensioner.

The embodiment disclosed herein is illustrative in all respects and should not be considered restrictive. The scope of the present disclosure is not intended to have the above-described meaning, but is intended to include meanings equivalent to the scope of the claims and all changes within the scope of the claims.

### [Description of Reference Numerals]

- 1: Electrostatic spraying device
- 2: Housing
- 11: Support rod
- 12: Spray nozzle
- 14: Support member
- 15: Charging section
- 41: Power supply line
- 42: Elastic member
- 43: Electrical resistance member
- 45: Insert nut (fixing member)

## Claims

1. An electrostatic spraying device equipped with a spray nozzle spraying a liquid and a strip-shaped charging section charging the liquid sprayed from the spray nozzle, the electrostatic spraying device comprising:
a power supply line which supplies power to the charging section;
an electrical resistance member that constitutes a part of a power supply path from the power supply line to the charging section and allows a current flowing through the charging section to be weaker than a current flowing through the power supply line; and
a housing which accommodates the electrical resistance member and into which the power supply line is drawn.

2. The electrostatic spraying device according to claim 1, further comprising:
a support rod which supports the spray nozzle; and
a support member that constitutes another part of the power supply path and supports the charging section,
wherein the housing is attached to the support rod, and
wherein the support member is attached to the housing.

3. The electrostatic spraying device according to claim 2, further comprising:
a conductive elastic member that is accommodated in the housing and is in elastic contact with one side of the electrical resistance member and the power supply line drawn into the housing; and
a fixing member that is disposed between the support member and the other side of the electrical resistance member in the power supply path and attaches the support member to the housing.

4. The electrostatic spraying device according to any one of claims 1 to 3,
wherein the charging section is a bare metal wire,
wherein the electrical resistance member includes a resistor, a block made of conductive rubber, or a block made of conductive resin, and
wherein the housing has a light shielding property.
